(19) **Europäisches Patentamt / European Patent Office / Office européen des brevets**

(11) **EP 1 753 950 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(21) Anmeldenummer: **05700791.6**

(22) Anmeldetag: **11.01.2005**

(51) Int Cl.:
**F02D 41/14** (2006.01)     **F02D 41/40** (2006.01)

(86) Internationale Anmeldenummer:
**PCT/EP2005/000152**

(87) Internationale Veröffentlichungsnummer:
**WO 2005/068811 (28.07.2005 Gazette 2005/30)**

(54) **VERFAHREN ZUR MOMENTENORIENTIERTEN STEUERUNG EINER BRENNKRAFTMASCHINE**

METHOD FOR THE MOMENT-ORIENTED CONTROL OF AN INTERNAL COMBUSTION ENGINE

PROCEDE DE COMMANDE ORIENTEE MOMENT D'UN MOTEUR A COMBUSTION INTERNE

(84) Benannte Vertragsstaaten:
**DE FR GB**

(30) Priorität: **14.01.2004 DE 102004001913**

(43) Veröffentlichungstag der Anmeldung:
**21.02.2007 Patentblatt 2007/08**

(73) Patentinhaber: **MTU FRIEDRICHSHAFEN GMBH
88045 Friedrichshafen (DE)**

(72) Erfinder:
• **BALDAUF, Johannes
88239 Wangen (DE)**

• **ECKSTEIN, Michael
88090 Immenstaad (DE)**
• **KECH, Johannes
88212 Ravensburg (DE)**
• **KUNZ, Andreas
88048 Friedrichshafen (DE)**
• **REHM, Christian
88046 Friedrichshafen (DE)**
• **REMELE, Jörg
88709 Hagnau (DE)**
• **SCHÖNLE, Martin
88048 Friedrichshafen (DE)**

(56) Entgegenhaltungen:
**DE-A1- 10 000 918     US-A1- 2003 017 911**

**EP 1 753 950 B1**

**Beschreibung**

Die Erfindung betrifft ein Verfahren zur momentenorientierten Steuerung einer Brennkraftmaschine nach dem Oberbegriff von Anspruch 1.

Der Betriebspunkt einer Brennkraftmaschine wird durch den Betreiber über eine den Leistungswunsch repräsentierende Eingangsgröße vorgegeben, z. B. Fahrpedalstellung. Bei einer momentenorientierten Steuerung der Brennkraftmaschine wird der Leistungswunsch des Betreibers als Momentenwunsch interpretiert. Hieraus berechnet ein elektronisches Steuergerät ein leistungsbestimmendes Signal zur Darstellung des Momentenwunsches am Abtrieb der Brennkraftmaschine, z. B. eine Einspritzmenge.

Aus der DE 100 00 918 A1 ist eine momentenorientierte Funktionsarchitektur bekannt. Bei dieser wird aus dem Leistungswunsch des Betreibers ein Momenten-Sollwert bestimmt, welcher unter Berücksichtigung einer weiteren Größe über ein Kraftstoffmengen-Kennfeld in eine Kraftstoffmenge für den Normalbetrieb der Brennkraftmaschine gewandelt wird. Die weitere Größe entspricht einem Momenten-Eingriff z. B. aus einer Antriebsschlupf-Regelung bzw. Motorschleppmoment-Regelung. Die berechnete Kraftstoffmenge für den Normalbetrieb wird danach über einen relativen Wirkungsgrad korrigiert. Dieser wird in Abhängigkeit eines Einspritz- bzw. Zündwinkels, einer Abgasrückführungsrate, einem Luftverhältnis sowie eines Ladedrucks und/oder Saugrohrdrucks bestimmt. Problematisch ist bei diesem Verfahren, dass das Temperaturverhalten einer Brennkraftmaschine bei dieser momentenorientierten Funktionsarchitektur nur unvollständig berücksichtigt ist.

Der Erfindung liegt die Aufgabe zu Grunde, eine momentenorientierte Steuerung einer Brennkraftmaschine im Bezug auf das Temperaturverhalten weiter zu entwickeln.

Die Aufgabe wird durch die Merkmale des Anspruchs 1 gelöst. Die entsprechenden Ausgestaltungen sind in den Unteransprüchen dargestellt.

Die Erfindung sieht vor, dass die weitere Größe einem relativen Reibmoment der Brennkraftmaschine entspricht, welches maßgeblich aus der Abweichung des aktuellen Zustands der Brennkraftmaschine zu einem Normzustand berechnet wird. Das relative Reibmoment wiederum wird über ein entsprechendes Kennfeld in Abhängigkeit einer Motor-Drehzahl und einer virtuellen Temperatur berechnet. Zur Berechnung der virtuellen Temperatur werden zwei gemessene Temperaturen über eine mathematische Funktion miteinander verknüpft.

In einer Ausführungsform der Erfindung ist vorgesehen, dass der relative Wirkungsgrad maßgeblich aus einer Umgebungs- und Kraftstoff-Temperatur, einem Umgebungs-Luftdruck und einer Luftmassenabweichungs-Korrektur bestimmt wird.

Die Vorteile der Erfindung sind, dass bei einer geänderten Umgebungsbedingung das Soll-Moment korrekt auf das Abtriebs-Moment umgesetzt wird. Über die mathematische Funktion zur Berechnung der virtuellen Temperatur kann das Berechnungsverfahren mit wenig Aufwand an unterschiedliche Kühlkreisläufe angepasst werden, z. B. eine Seewasserkühlung und Luftkühlung. Die virtuelle Temperatur bildet zusätzlich eine Redundanz, sodass bei einem Ausfall eines Temperatur-Sensors der weitere Betrieb der Brennkraftmaschine gewährleistet ist.

In den Zeichnungen ist ein bevorzugtes Ausführungsbeispiel dargestellt. Es zeigen:

Fig. 1     ein Systemschaubild;
Fig. 2     ein Blockschaltbild zur momentenorientierten Funktionsarchitektur;
Fig. 3     ein Blockschaltbild zur Berechnung des relativen Wirkungsgrads;
Fig. 4     ein Blockschaltbild zur Berechnung des relativen Reibmoments;
Fig. 5     ein Blockschaltbild zur Berechnung der virtuellen Temperatur;
Fig. 6     einen Programmablaufplan.

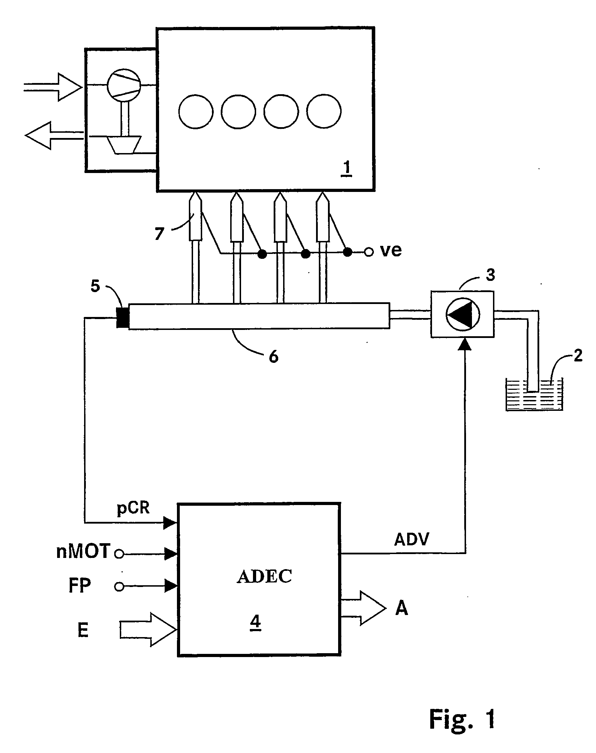

Die Figur 1 zeigt ein Systemschaubild einer Brennkraftmaschine 1 mit einem elektronischen Steuergerät 4. Bei der dargestellten Brennkraftmaschine 1 wird der Kraftstoff über ein Common-Rail-System eingespritzt. Dieses umfasst folgende Komponenten: Pumpen 3 mit einer Saugdrossel zur Förderung des Kraftstoffs aus einem Kraftstofftank 2, ein Rail 6 zum Speichern des Kraftstoffs und Injektoren 7 zum Einspritzen des Kraftstoffs aus dem Rail 6 in die Brennräume der Brennkraftmaschine 1.

Die Betriebsweise der Brennkraftmaschine 1 wird durch das elektronisches Steuergerät (ADEC) 4 geregelt. Das elektronische Steuergerät 4 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten in Kennfeldern/Kennlinien appliziert. Über diese berechnet das elektronische Steuergerät 4 aus den Eingangsgrößen die Ausgangsgrößen. In Figur 1 sind exemplarisch folgende Eingangsgrößen dargestellt: ein Ist-Raildruck pCR, der mittels eines Rail-Drucksensors 5 gemessen wird, ein Drehzahl-Signal nMOT der Brennkraftmaschine 1, ein Signal FP zur Leistungs-Vorgabe durch den Betreiber und eine Eingangsgröße E. Unter der Eingangsgröße E sind beispielsweise der Ladeluftdruck eines Turboladers und die Temperaturen der Kühl-/Schmiermittel und des Kraftstoffs subsumiert.

In Figur 1 sind als Ausgangsgrößen des elektronischen Steuergeräts 4 ein Signal ADV zur Steuerung der Saugdrossel und eine Ausgangsgröße A dargestellt. Die Ausgangsgröße A steht stellvertretend für die weiteren Stellsignale zur Steuerung und Regelung der Brennkraftmaschine 1, beispielsweise einem leistungsbestimmenden Signal ve, hier: Einspritzmenge.

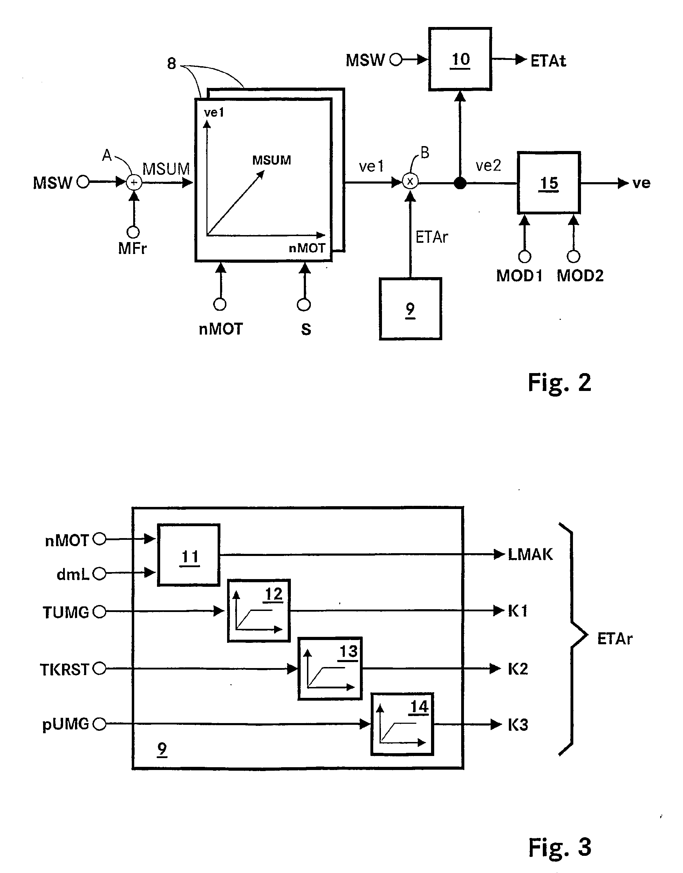

Die Figur 2 zeigt ein Blockschaltbild einer momentenorientierten Funktionsarchitektur. Die Eingangsgrößen sind: ein Momenten-Sollwert MSW, ein relatives Reibmoment MFr, die Motor-Drehzahl nMOT und ein Signal S. Die Ausgangsgrößen sind: das leistungsbestimmende Signal ve und ein tatsächlicher Wirkungsgrad ETAt. Der Momenten-Sollwert MSW wird aus einer den Leistungswunsch repräsentierenden Eingangsgröße, z. B. Fahrpedalstellung FP, ermittelt. An einer Stelle A werden der Momenten-Sollwert MSW und das relative Reibmoment MFr addiert. Das relative Reibmoment MFr wird maßgeblich aus der Abweichung des aktuellen zustands der Brennkraftmaschine 1 zu einem Normzustand berechnet. Der Normzustand wird vom Hersteller der Brennkraftmaschine bei Prüfstandsversuchen vorgegeben. Dieser ist für eine betriebswarme Brennkraftmaschine z. B. durch einen Umgebungs-Luftdruck von 1013 Hektopascal, einer Umgebungs-Temperatur von 25 Grad Celsius und einer konstanten Kraftstoff-Temperatur gekennzeichnet. Befindet sich die Brennkraftmaschine im Normzustand, so ist das relative Reibmoment MFr Null. Die Summe des Soll-Moments MSW und des relativen Reibmoments MFr ist in Figur 2 als Gesamt-Moment MSUM bezeichnet. Das Gesamt-Moment MSUM entspricht einer der Eingangsgrößen für ein Kennfeld 8. Über das Kennfeld 8 wird in Abhängigkeit der Motor-Drehzahl nMOT und des Gesamt-Moments MSUM ein erstes leistungsbestimmendes Signal ve1 berechnet. In der Praxis kann das erste leistungsbestimmende Signal ve1 einer Einspritzmenge, Einheit: Milligramm/Einspritzung, entsprechen. Über das Signal S kann vom Betreiber zwischen verschiednen Kennfeldern 8 umgeschaltet werden. Die Kennfelder 8 können als ein abgasoptimiertes oder verbrauchsoptimiertes Kennfeld 8 ausgeführt sein.

An einer Stelle B wird das erste leistungsbestimmende Signal ve1 mit einem relativen Wirkungsgrad ETAr multipliziert. Die Berechnung des relativen Wirkungsgrads ETAr erfolgt in einem Funktionsblock 9 und wird in Verbindung mit der Figur 3 erläutert. Das Produkt des ersten leistungsbestimmenden Signals ve1 mit dem relativen Wirkungsgrad ETAr ergibt ein zweites leistungsbestimmendes Signal ve2. Über einen Funktionsblock 10 wird aus dem zweiten leistungsbestimmenden Signal ve2 und dem Momenten-Sollwert MSW ein tatsächlicher Wirkungsgrad ETAt berechnet. Der tatsächliche Wirkungsgrad ETAt wird beispielsweise zur Berechnung einer luftmassenabhängigen Momenten-Begrenzung verwendet. Aus dem zweiten leistungsbestimmenden Signal ve2 wird über einen Funktionsblock 15 in Abhängigkeit einer ersten Betriebsart MOD1 oder einer zweiten Betriebsart MOD2 das leistungsbestimmende Signal ve berechnet. Die Betriebsart entspricht in der Praxis z. B. dem Betrieb der Brennkraftmaschine als Voll-Motor (MOD1) oder Halb-Motor (MOD2). Beim Halb-Motor ist nur die Hälfte der Zylinder befeuert. Das leistungsbestimmende Signal ve entspricht der erforderlichen Kraftstoffmenge zur Darstellung des Momenten-Sollwerts MSW am Abtrieb der Brennkraftmaschine 1.

Die Figur 3 zeigt ein Blockschaltbild zur Berechnung des relativen Wirkungsgrads ETAr. Die Eingangsgrößen sind: die Motor-Drehzahl nMOT, eine Luftmasse dmL, eine Umgebungs-Temperatur TUMG, eine Kraftstoff-Temperatur TKRST und ein Umgebungs-Luftdruck pUMG. Die Ausgangsgröße entspricht dem relativen Wirkungsgrad ETAr. Innerhalb des Funktionsblocks 9 befinden sich ein Funktionsblock 11 zur Berechnung einer Luftmassenabweichungs-Korrektur LMAK und Kennlinien 12 bis 14: Aus der Motor-Drehzahl nMOT und der Luftmassen-Abweichung dmL wird über den Funktionsblock 11 die Luftmassenabweichungs-Korrektur LMAK bestimmt. Über diese wird bei einer sich verändernden Luftmasse, z. B. beim Schalten von Abgasturboladern, eine Korrektur bewirkt. Aus der Umgebungs-Temperatur TUMG wird über die Kennlinie 12 eine Größe K1 berechnet. Aus der Kraftstoff-Temperatur TKRST wird über die Kennlinie 13 eine Größe K2 bestimmt. Der Umgebungs-Luftdruck pUMG wird über die Kennlinie 14 in eine Größe K3 umgesetzt. Die Kennlinien 12, 13 und 14 sind in der Art ausgeführt, dass bei Normzustand die Größen K1 bis K3 den Wert Eins besitzen.

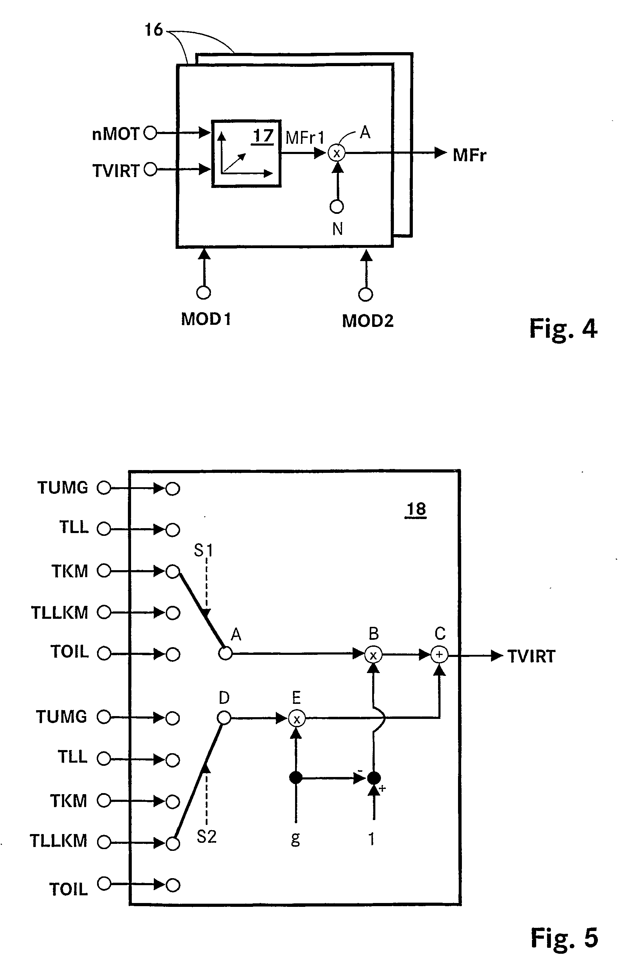

Die Figur 4 zeigt ein Blockschaltbild zur Berechnung des relativen Reibmoments MFr. Die Eingangsgrößen sind: die Motor-Drehzahl nMOT, die virtuelle Temperatur TVIRT und die Betriebsart MOD1 bzw. MOD2. Die Ausgangsgröße entspricht dem relativen Reibmoment MFr. Der Funktionsblock 16 enthält ein Kennfeld 17 und eine Multiplikationsstelle A. Über das Kennfeld 17 wird in Abhängigkeit der Motor-Drehzahl nMOT und der virtuellen Temperatur TVIRT ein erstes relatives Reibmoment MFr1 bestimmt. An der Stelle A wird dieses mit der Anzahl der Zylinder N multipliziert. Das Ergebnis entspricht dem relativen Reibmoment MFr. Über das Signal Betriebsart MOD1 und MOD2 wird der Funktionsblock 16 für einen Voll-Motor oder Halb-Motor ausgewählt. Selbstverständlich kann für die Berechnung des relativen Reibmoments MFr die Anzahl der Zylinder N entfallen, so dass das erste relative Reibmoment MFR1 und das relative Reibmoment MFr identisch sind. Alternativ kann die Anzahl der Zylinder N ausschließlich beim Kennfeld 17 berücksichtigt werden.

In Figur 5 ist ein Funktionsblock 18 zur Berechnung der virtuellen Temperatur TVIRT dargestellt. Über den Funktionsblock 18 wird in Abhängigkeit von Eingangstemperaturen und einem Gewichtungsfaktor g die virtuellen Temperatur TVIRT berechnet. Die Eingangs-Größen des Funktionsblocks 18 sind: die Umgebungs-Temperatur TUMG, eine Ladeluft-Temperatur TLL, eine Kühlmittel-Temperatur TKM, eine Temperatur des Ladeluftkühler-Kühlmittels TLLKM und eine Schmiermittel-Temperatur TOIL.

Jede Messgröße ist zweifach auf den Funktionsblock 18 geführt. Über einen Schalter S1 wird eine dieser Temperaturen ausgewählt und auf einen ersten Signalpfad mit den Punkten AB geführt. Über einen Schalter S2 wird ebenfalls aus diesen Eingangs-Temperaturen eine Temperatur ausgewählt und auf einen zweiten Signalpfad mit den Punkten DE geführt. Bei der Darstellung in Figur 5 entspricht das Signal am Punkt A folglich der Temperatur des Kühlmittels TKM. Am Punkt D entspricht das Signal der Temperatur des Ladeluftkühler-Kühlmittels TLLKM. Am Punkt E des zweiten Signalpfads wird diese Temperatur mit dem Faktor g gewichtet. Über den Faktor g kann die Berechnung der virtuellen Temperatur TVIRT an verschiedene Kühl-Kreisläufe angepasst werden. Bekanntermaßen kann eine Brennkraftmaschine z. B. mit Seewasser oder mit Umgebungsluft gekühlt werden. Das Ergebnis dieser Multiplikation am Punkt E wird auf den ersten Signalpfad, Punkt C, geführt. Das Signal am Punkt A des ersten Signalpfads wird an einem Punkt B mit dem Ergebnis der Berechnung Eins minus g multipliziert und ebenfalls auf den Punkt C geführt.

Für die Darstellung der Figur 5 ergibt sich die Berechnung der virtuellen Temperatur TVIRT gemäß folgender mathematischer Funktion:

$$TVIRT = T1 \, (1 - g) + T2 \cdot g$$

mit

| | |
|---|---|
| T1 | erste Temperatur, hier: TKM |
| T2 | zweite Temperatur, hier: TLLKM |
| TVIRT | virtuelle Temperatur |
| TKM | Kühlmittel-Temperatur |
| TLLKM | Temperatur Ladeluftkühler-Kühlmittel |
| g | Gewichtungsfaktor |

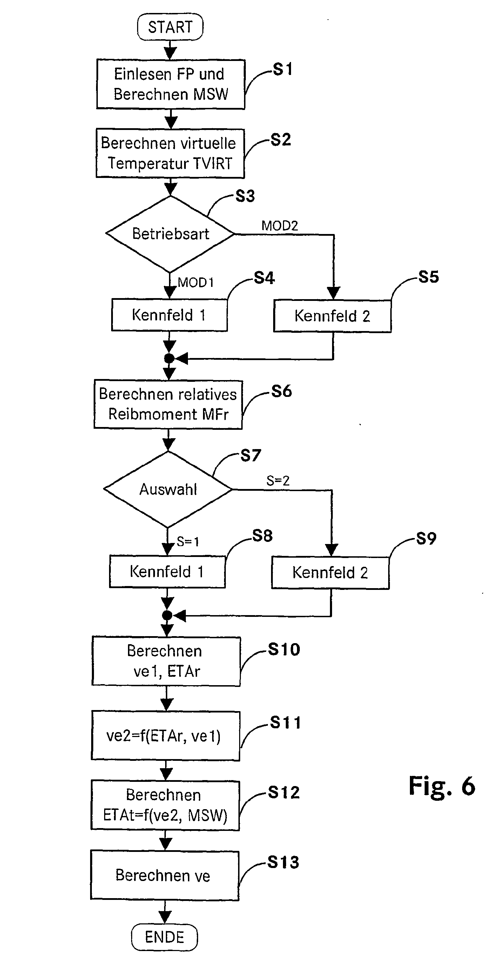

In Figur 6 ist ein Programmablaufplan dargestellt. Bei S1 wird der Fahrerwunsch FP eingelesen und hieraus der Momenten-Sollwert MSW berechnet. Danach wird die virtuelle Temperatur TVIRT bei S2 berechnet. Bei S3 wird geprüft, welche Betriebsart vorliegt. Wird die Brennkraftmaschine als Voll-Motor (MOD1) betrieben, so wird bei S4 ein erstes Kennfeld ausgewählt. Dieses Kennfeld entspricht dem Kennfeld 17 der Figur 4. Wird die Brennkraftmaschine als Halb-Motor (MOD2) betrieben, so wird der Pfad mit S5 durchlaufen, d. h. ein zweites Kennfeld wird ausgewählt. Danach erfolgt bei S6 die Berechnung des relativen Reibmoments MFr. Bei S7 wird geprüft, ob der Anwender das verbrauchsoptimierte Kennfeld 1, S8, oder das abgasoptimierte Kennfeld 2, S9, ausgewählt hat. Danach wird bei S10 das erste leistungsbestimmende Signal ve1, z. B. eine Einspritzmenge (Milligramm/Einspritzung), und der relative Wirkungsgrad ETAr berechnet. Der relative Wirkungsgrad ETAr dient zur Korrektur des ersten leistungsbestimmenden Signals ve1. Das Ergebnis der Korrektur entspricht dem zweiten leistungsbestimmenden Signal ve2, S11. Aus dem zweiten leistungsbestimmenden Signal ve2 und dem Momenten-Sollwert MSW wird danach bei S12 ein tatsächlicher Wirkungsgrad ETAt berechnet. Bei S13 wird aus dem zweiten leistungsbestimmenden Signal ve2 das leistungsbestimmende Signal ve berechnet. Das leistungsbestimmende Signal ve entspricht der erforderlichen Kraftstoffmenge zur Darstellung des Momenten-Sollwerts MSW am Abtrieb der Brennkraftmaschine 1. Damit ist der Programmablaufplan beendet.

Bezugszeichen

| | |
|---|---|
| 1 | Brennkraftmaschine |
| 2 | Kraftstofftank |
| 3 | Pumpen mit Saugdrossel |
| 4 | Elektronisches Steuergerät (ADEC) |
| 5 | Rail-Drucksensor |
| 6 | Rail |
| 7 | Injektor |
| 8 | Kennfeld |
| 9 | Funktionsblock Berechnung ETAr |
| 10 | Funktionsblock Berechnung ETAt |
| 11 | Funktionsblock Berechnung LMAK |
| 12, 13, 14 | Kennlinie |

15      Funktionsblock Betriebsart
16      Funktionsblock Berechnung MFr
17      Kennfeld MFR
18      Funktionsblock Berechnung TVIRT


**Patentansprüche**

**1.** Verfahren zur momentenorientierten Steuerung einer Brennkraftmaschine (1), bei dem aus einer den Leistungswunsch repräsentierenden Eingangsgröße (FP) ein Momenten-Sollwert (MSW) berechnet wird, der Momenten-Sollwert (MSW) unter Berücksichtigung einer weiteren Größe über ein Kennfeld (8) in ein erstes leistungsbestimmendes Signal (ve1) gewandelt wird, das erste leistungsbestimmende Signal (ve1) über einen relativen Wirkungsgrad (ETAr) zu einem zweiten leistungsbestimmenden Signal (ve2) korrigiert wird, aus welchem ein leistungsbestimmendes Signal (ve) berechnet wird und die Steuerung des Abtriebs-Moments der Brennkraftmaschine (1) mittels des leistungsbestimmenden Signals (ve) bestimmt wird,
**dadurch gekennzeichnet,**
**dass** die weitere Größe einem relativen Reibmoment (MFr) entspricht, welches maßgeblich aus der Abweichung des aktuellen Zustands der Brennkraftmaschine (1) zu einem Normzustand berechnet wird, wobei im Normzustand das relative Reibmoment (MFr) Null ist.

**2.** Verfahren nach Anspruch 1,
**dadurch gekennzeichnet,**
**dass** das relative Reibmoment (MFr) über ein Kennfeld (17) in Abhängigkeit einer Motor-Drehzahl (nMOT) und einer virtuellen Temperatur (TVIRT) der Brennkraftmaschine (1) berechnet wird.

**3.** Verfahren nach Anspruch 2,
**dadurch gekennzeichnet,**
**dass** das relative Reibmoment (MFr) zusätzlich in Abhängigkeit einer Betriebsart (MOD1, MOD2) der Brennkraftmaschine (1) berechnet wird.

**4.** Verfahren nach Anspruch 3,
**dadurch gekennzeichnet,**
**dass** die Betriebsart einer Betriebsweise der Brennkraftmaschine (1) als Voll-Motor (MOD1) oder Halb-Motor (MOD2) entspricht.

**5.** Verfahren nach Anspruch 2,
**dadurch gekennzeichnet,**
**dass** die virtuelle Temperatur (TVIRT) der Brennkraftmaschine (1) aus zwei gemessenen Temperaturen mittels einer mathematischen Funktion berechnet wird.

**6.** Verfahren nach Anspruch 5,
**dadurch gekennzeichnet,**
**dass** die virtuelle Temperatur (TVIRT) gemäß folgender mathematischer Funktion berechnet wird:

$$TVIRT = T1 \, (1 - g) + T2 \cdot g$$

mit

T1 erste Temperatur
T2 zweite Temperatur
TVIRT virtuelle Temperatur
g Gewichtungsfaktor

**7.** Verfahren nach einem der vorausgegangenen Ansprüche,
**dadurch gekennzeichnet,**

**dass** ein tatsächlicher Wirkungsgrad (ETAt) aus dem Momenten-Sollwert (MSW) und dem zweiten leistungsbestimmenden Signal (ve2) berechnet wird.

8. Verfahren nach Anspruch 7,
**dadurch gekennzeichnet,**
**dass** eine luftmassenabhängige Momenten-Begrenzung auf der Basis des tatsächlichen Wirkungsgrads (ETAt) berechnet wird.

9. Verfahren nach Anspruch 1,
**dadurch gekennzeichnet,**
**dass** der relative Wirkungsgrad (ETAr) maßgeblich aus einer Umgebungs-Temperatur (TUMG), einer Kraftstoff-Temperatur (TKRST), einem Umgebungs-Luftdruck (pUMG) und einer Luftmassenabweichungs-Korrektur (LMAK) bestimmt wird.

10. Verfahren nach Anspruch 9,
**dadurch gekennzeichnet,**
**dass** die Luftmassenabweichungs-Korrektur (LMAK) in Abhängigkeit der Motor-Drehzahl (nMOT) und einer Luftmassen-Abweichung (dmL) berechnet wird.

11. Verfahren nach Anspruch 9,
**dadurch gekennzeichnet,**
**dass** die Umgebungs-Temperatur (TUMG), die Kraftstoff-Temperatur (TKRST) und der Umgebungs-Luftdruck (pUMG) jeweils über eine Kennlinie (12, 13, 14) gewichtet werden.

12. Verfahren nach Anspruch 1,
**dadurch gekennzeichnet,**
**dass** das leistungsbestimmende Signal (ve) berechnet wird, indem das zweite leistungsbestimmende Signal (ve2) anhand der Betriebsart (MOD1, MOD2) gewichtet wird.

**Claims**

1. Method for the torque-oriented control of an internal combustion engine (1), by which a torque reference value (MSW) is computed from an input value (FP) representing the power request, the torque reference value (MSW) is converted into a first power-determining signal (ve1) while taking account of a further value via an input-output map (8), the first power-determining signal (ve1) is corrected by a relative efficiency factor (ETAr) to form a second power-determining signal (ve2) from which a power-determining signal (ve) is computed and the control of the output torque of the internal combustion engine (1) is determined by means of the power-determining signal (ve), **characterized in that** the further value corresponds to a relative friction torque (MFr) which is computed essentially from the deviation of the current state of the internal combustion engine (1) from a standard state, the relative friction torque (MFr) being zero in the standard state.

2. Method according to Claim 1, **characterized in that** the relative friction torque (MFr) is computed via an input-output map (17) in dependence on an engine speed (nMOT) and a virtual temperature (TVIRT) of the internal combustion engine (1).

3. Method according to Claim 2, **characterized in that** the relative friction torque (MFr) is computed additionally in dependence on an operating mode (MOD1, MOD2) of the internal combustion engine (1).

4. Method according to Claim 3, **characterized in that** the operating mode corresponds to a manner of operating the internal combustion engine (1) as a full engine (MOD1) or a half-engine (MOD2).

5. Method according to Claim 2, **characterized in that** the virtual temperature (TVIRT) of the internal combustion engine (1) is computed from two measured temperatures by means of a mathematical function.

6. Method according to Claim 5, **characterized in that** the virtual temperature (TVIRT) is computed according to the following mathematical function:

$$TVIRT = T1 \ (1 - g) + T2 \cdot g$$

where

T1 first temperature
T2 second temperature
TVIRT virtual temperature
g weighting factor.

7. Method according to any one of the preceding claims, **characterized in that** an actual efficiency factor (ETAt) is computed from the torque reference value (MSW) and the second power-determining signal (ve2).

8. Method according to Claim 7, **characterized in that** an air mass-dependent torque limit is computed on the basis of the actual efficiency factor (ETAt).

9. Method according to Claim 1, **characterized in that** the relative efficiency factor (ETAr) is determined essentially from an ambient temperature (TUMG), a fuel temperature (TKRST), an ambient air pressure (pUMG) and an air mass deviation correction factor (LMAK).

10. Method according to Claim 9, **characterized in that** the air mass deviation correction factor (LMAK) is computed in dependence on the engine speed (nMOT) and an air mass deviation (dmL).

11. Method according to Claim 9, **characterized in that** the ambient temperature (TUMG), the fuel temperature (TKRST) and the ambient air pressure (pUMG) are each weighted via a respective characteristic curve (12, 13, 14).

12. Method according to Claim 1, **characterized in that** the power-determining signal (ve) is computed by weighting of the second power-determining signal (ve2) with reference to the operating mode (MOD1, MOD2).

## Revendications

1. Procédé de commande d'un moteur à combustion interne (1) en fonction du couple, dans lequel une valeur de consigne (MSW) du couple est calculée à partir d'une grandeur d'entrée (FP) qui représente la puissance demandée, la valeur de consigne (MSW) du couple étant convertie à l'aide d'un champ de caractéristiques (8) en un premier signal (ve1) de détermination de la puissance en tenant compte d'une autre grandeur, le premier signal (ve1) de détermination de la puissance étant corrigé par l'intermédiaire d'un rendement relatif (ETAr) en un deuxième signal (ve2) de détermination de la puissance à partir duquel un signal (ve) de détermination de la puissance est calculé, la commande du couple délivré par le moteur à combustion interne (1) étant déterminée au moyen du signal (ve) de détermination de puissance,
**caractérisé en ce que** l'autre grandeur correspond à un couple relatif de frottement (MFr) calculé de manière déterminante à partir de l'écart entre l'état effectif du moteur à combustion interne (1) et un état normalisé, le couple de frottement relatif (MFr) étant nul à l'état normalisé.

2. Procédé selon la revendication 1, **caractérisé en ce que** le couple de frottement relatif (MFr) est calculé à l'aide d'un champ de caractéristiques (17) en fonction du régime de rotation du moteur (nMOT) et d'une température virtuelle (TVIRT) du moteur à combustion interne (1).

3. Procédé selon la revendication 2, **caractérisé en ce que** le couple de frottement relatif (MFr) est de plus calculé en fonction d'un mode de fonctionnement (MOD1, MOD2) du moteur à combustion interne (1).

4. Procédé selon la revendication 3, **caractérisé en ce que** le mode de fonctionnement correspond à une utilisation du moteur à combustion interne (1) comme moteur plein (MOD1) ou comme demi-moteur (MOD2).

5. Procédé selon la revendication 2, **caractérisé en ce que** la température virtuelle (TVIRT) du moteur à combustion interne (1) est calculée au moyen d'une fonction mathématique à partir de deux températures mesurées.

**6.** Procédé selon la revendication 5, **caractérisé en ce que** la température virtuelle (TVIRT est calculée selon la fonction mathématique ci-dessous:

$$TVIRT = T1 (1 - g) + T2 . g$$

dans laquelle

T1 Première température
T2 Deuxième température
TVIRT Température virtuelle
g Facteur de pondération

**7.** Procédé selon l'une quelconque des revendications précédentes, **caractérisé en ce que** le rendement effectif (ETAt) est calculé à partir de la valeur de consigne (MSW) du couple et du deuxième signal (ve2) de détermination de la puissance.

**8.** Procédé selon la revendication 7, **caractérisé en ce qu'**une limitation du couple en fonction du débit d'air est calculée à partir du rendement effectif (ETAt).

**9.** Procédé selon la revendication 1, **caractérisé en ce que** le rendement relatif (ETAr) est déterminé de manière déterminante à partir de la température ambiante (TUMG), de la température du carburant (TKRST), de la pression d'air ambiante (pUMG) et d'une correction de l'écart de débit d'air (LMAK).

**10.** Procédé selon la revendication 9, **caractérisé en ce que** la correction de l'écart de débit d'air (LMAK) est calculée en fonction du régime de rotation du moteur (nMOT) et d'un écart du débit d'air (dmL).

**11.** Procédé selon la revendication 9, **caractérisé en ce que** la température ambiante (TUMG), la température du carburant (TKRST) et la pression d'air ambiante (pUMG) sont pondérées par une ligne caractéristique (12, 13, 14) respective.

**12.** Procédé selon la revendication 1, **caractérisé en ce que** le signal (ve) de détermination de la puissance est calculé en pondérant le deuxième signal (ve2) de détermination de puissance par le mode de fonctionnement (MOD1, MOD2).

**Fig. 1**

**Fig. 2**

**Fig. 3**

**Fig. 4**

**Fig. 5**

START

Einlesen FP und
Berechnen MSW — S1

Berechnen virtuelle
Temperatur TVIRT — S2

S3

Betriebsart — MOD2

MOD1 — S4

Kennfeld 1

S5

Kennfeld 2

Berechnen relatives
Reibmoment MFr — S6

S7

Auswahl — S=2

S=1 — S8

Kennfeld 1

S9

Kennfeld 2

Berechnen
ve1, ETAr — S10

ve2=f(ETAr, ve1) — S11

Berechnen
ETAt=f(ve2, MSW) — S12

Berechnen ve — S13

ENDE

**Fig. 6**

**EP 1 753 950 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10000918 A1